# EUROPEAN PATENT APPLICATION

(11) **EP 4 600 404 A1**
(43) Date of publication of application: **13.08.2025**
(21) Application number: 23906806.7
(22) Date of filing: 11.12.2023
(51) Int. Cl.: C23C 26/00, C09D 5/02, C09D 7/61, C09D 7/63, C09D 201/00, C21D 9/46, C23C 22/00

(54) **METHOD FOR MANUFACTURING ELECTROMAGNETIC STEEL SHEET WITH INSULATING FILM**

(30) Priority: 23.12.2022 JP 2022207307
(71) Applicant: JFE Steel Corporation, Tokyo 100-0011 (JP)
(72) Inventor: MURAMATSU Naoki, Tokyo 100-0011 (JP); MATSUDA Takeshi, Tokyo 100-0011 (JP)
(74) Representative: Hoffmann Eitle
(86) International application number: PCT/JP2023/044276
(87) International publication number: WO 2024/135441

(57) **Abstract**

Provided is a method of producing an electrical steel sheet with an insulating coating that excels in both punchability and weldability under more severe evaluation conditions. The method of producing an electrical steel sheet with an insulating coating includes a process of preparing a water-based coating material and a process of applying the water-based coating material to the surface of an electrical steel sheet and heating and drying to form an insulating coating. The water-based coating material contains resin, an inorganic component, an optional organic reductant, an optional B compound, and water. 50 mass% or more of the resin consists of one or both of emulsion resin and dispersion resin. The water-based coating material has a viscosity of 1.0 mPa·s or more.

## Description

### TECHNICAL FIELD

The present disclosure relates to a method of producing an electrical steel sheet with an insulating coating.

### BACKGROUND

An electrical steel sheet with an insulating coating is of course required to have excellent magnetic properties as a basic characteristic, but various other properties are also required in the production of motors, transformers, and the like. Examples of properties required in the production of such products include punchability, weldability (welding of end faces), coating adhesion, and corrosion resistance. The addition of a resin component to the insulating coating is known to be effective in improving punchability. However, the addition of resin is a cause of blow holes during welding, so a challenge has been to achieve both punchability and weldability.

Patent Literature (PTL) 1 describes a "method of producing an electrical steel sheet with an insulating coating that has excellent weldability and punchability, the method comprising applying a water-based coating solution containing resin and an inorganic component to the surface of an electrical steel sheet and then heating and baking from the steel sheet side".

### CITATION LIST

### Patent Literature

PTL 1: JP 2003-213444 A

### SUMMARY

### (Technical Problem)

Although weldability and punchability were improved in PTL 1, there was room for improvement in achieving both weldability under more severe evaluation conditions and punchability.

In view of the above technical problem, it would be helpful to provide a method of producing an electrical steel sheet with an insulating coating that excels in both punchability and weldability under more severe evaluation conditions.

### (Solution to Problem)

The inventors have conducted extensive studies and newly discovered that by keeping the viscosity of a water-based coating material containing resin and an inorganic component used to form an insulating coating in an appropriate range, an electrical steel sheet with an insulating coating is obtainable that excels in both punchability and weldability under more severe evaluation conditions. The effect of improving punchability and weldability by keeping the viscosity of the water-based coating material applied to the electrical steel sheet in an appropriate range is not limited to the case of heating from the steel sheet side by induction heating as described in PTL 1. The effect was also found to be obtainable when heating from the surface of the coating formed from the water-based coating material, as in a gas furnace or an electric furnace.

The present disclosure was completed based on these discoveries, and primary features of the present disclosure are described below.
[1] A method of producing an electrical steel sheet with an insulating coating, the method comprising:
   a process of preparing a water-based coating material; and
   a process of applying the water-based coating material to the surface of an electrical steel sheet and heating and drying to form an insulating coating, wherein
   the water-based coating material contains resin, an inorganic component, an optional organic reductant, an optional boron compound (B compound), and water,
   50 mass% or more of the resin consists of one or both of emulsion resin and dispersion resin, and
   the water-based coating material has a viscosity of 1.0 mPa·s or more.
[2] The method of producing an electrical steel sheet with an insulating coating according to [1], wherein the water-based coating material has a viscosity of 40 mPa·s or less.
[3] The method of producing an electrical steel sheet with an insulating coating according to [1], wherein the water-based coating material has a viscosity of 10 mPa·s or less.
[4] The method of producing an electrical steel sheet with an insulating coating according to any one of [1] to [3], wherein one or both of the emulsion resin and the dispersion resin in the water-based coating material have a particle size of 30 nm or more.
[5] The method of producing an electrical steel sheet with an insulating coating according to any one of [1] to [4], wherein a solid mass fraction of the resin relative to the total mass in terms of solid content of the resin, the inorganic component, the organic reductant, and the B compound in the water-based coating material is 0.5 mass% or more and 50 mass% or less.

### (Advantageous Effect)

The method of producing an electrical steel sheet with an insulating coating allows the electrical steel sheet with an insulating coating to be produced that has both excellent punchability and weldability under more severe evaluation conditions.

### DETAILED DESCRIPTION

The following describes an embodiment of the method of producing an electrical steel sheet with an insulating coating. The embodiment described below is an example embodiment of the present disclosure, and does not limit configuration to the specific example described.

The method of producing an electrical steel sheet with an insulating coating according to an embodiment of the present disclosure includes a process of preparing a water-based coating material and a process of applying the water-based coating material to the surface of an electrical steel sheet and heating and drying to form an insulating coating. The water-based coating material contains resin, an inorganic component, an optional organic reductant, an optional B compound, and water, and 50 mass% or more of the resin consists of one or both of emulsion resin and dispersion resin, and the water-based coating material has a viscosity of 1.0 mPa·s or more.

There are no particular restrictions on the electrical steel sheet as a substrate for the insulating coating, but appropriate composition adjustment is preferably carried out according to desired properties. For example, increasing specific resistance is effective in improving (suppressing) iron loss, and therefore specific resistance improving components such as Si, Al, Mn, Cr, P, Ni, and the like are preferably added. These component fractions may be determined according to desired magnetic properties.

C and S in the electrical steel sheet are elements unfavorable to weldability, and it is also desirable to decrease the amount contained in terms of magnetic properties. C content in the electrical steel sheet is therefore preferably 0.01 mass% or less. Further, S content in the electrical steel sheet is preferably 0.01 mass% or less. There are no particular restrictions on other trace components, segregation elements such as Sb and Sn, or inevitable impurity in the electrical steel sheet.

There is no particular restriction on the method of producing the electrical steel sheet, and various conventionally known methods are applicable. Further, surface roughness of the steel sheet is not particularly restricted. When the stacking factor is considered important, the three-dimensional surface roughness SRa is preferably 0.5 µm or less. Further, there is no particular restriction on the final sheet thickness of the steel sheet, and various thicknesses are applicable. From the viewpoint of magnetic properties, the thickness is preferably 0.8 mm or less.

The water-based coating material contains resin and an inorganic component. The resin and the inorganic component have properties that allow dissolution or dispersal in water. Further, the water-based coating material may also contain one or both of an organic reductant and a B compound. The water-based coating material may use any type of coating solution, including coating solutions containing at least a chromate and resin, coating solutions containing at least a phosphate and resin, and coating solutions containing at least an inorganic colloid and resin. Further, various components may be added to the water-based coating material to improve heat resistance or corrosion resistance.

The type of resin in the water-based coating material is not particularly limited, and one or more resins selected from acrylic resin, epoxy resin, urethane resin, phenol resin, styrene resin, amide resin, imide resin, urea resin, vinyl acetate resin, alkyd resin, polyolefin resin, polyester resin, and the like may be used alone, as a copolymer, or as a mixture. Of the total amount of resin (solid content) in the water-based coating material, 50 mass% or more is resin that has a particle size, that is, one or both of emulsion resin and dispersion resin. The mass fraction of one or both of emulsion resin and dispersion resin in the water-based coating material is 50 mass% or more and 100 mass% or less, meaning that the mass fraction of completely water-soluble resin without a particle size is 0 mass% or more and 50 mass% or less. When the mass fraction of completely water-soluble resin without a particle size exceeds 50 mass%, improvement in punchability is not satisfactory. Hereinafter, when calculating the mass fraction of one or both of emulsion resin and dispersion resin relative to the total amount of resin, so-called monomers such as water-soluble acrylic acid, which are components of resin, are also included in "resin".

One or both of emulsion resin and dispersion resin in the water-based coating material preferably has a particle size of 30 nm or more. When the particle size of one or both of emulsion resin and dispersion resin is 30 nm or more, a favorable resin area that adheres to the press die edge surface and covers the press die lead end during punching is obtainable, a favorable adhesive wear suppression effect between the press die edge surface and working material is obtainable, and favorable punchability is obtainable. An upper limit of particle size of resin is not particularly restricted. When stacking factor is considered important, the particle size of resin is preferably 1 µm or less. The particle size of resin can be measured by dynamic light scattering according to JIS 8828:2013.

In the water-based coating material, the solid mass fraction of resin relative to the total mass in terms of solid content of resin, inorganic component, organic reductant, and B compound is preferably 0.5 mass% or more. The solid mass fraction of resin is preferably 50 mass% or less. When the solid mass fraction of resin is 0.5 mass% or more, the effect of improving punchability (adhesion wear suppression effect) mentioned above is favorably obtainable. When the solid mass fraction of resin is 50 mass% or less, a favorable amount of organic matter that decomposes and vaporizes during welding is obtainable, blow holes can be suppressed in the weld bead, and favorable weldability is obtainable. The solid mass fraction of resin is more preferably 40 mass% or less.

Examples of inorganic component in the water-based coating material include Cr compounds, P compounds, Si compounds, and the like. Examples of Cr compounds include chromate and dichromate containing at least one of the following metals: Ca, Mg, Zn, K, Na, or Al, and one or more of these can be used. Phosphates are applicable as P compounds, and examples include aluminum phosphate monobasic, magnesium phosphate, calcium phosphate, iron phosphate, zinc phosphate, and the like, and one or more of these can be used. Examples of Si compounds include colloidal silica, fumed silica, plate-like silica, and the like, and one or more of these can be used. Colloidal silica, fumed silica and plate-like silica form particulates in the insulating coating. Further, a plurality of inorganic compounds may be included.

From the viewpoint of improving insulation and corrosion resistance of the insulating coating, the solid mass fraction of the inorganic component relative to the total mass in terms of solid content of resin, inorganic component, organic reductant, and B compound is preferably 30 mass% or more. The solid mass fraction of the inorganic component is more preferably 60 mass% or more. Further, when the fraction of the inorganic component is too high, there is a concern about degradation of punchability, and therefore the mass fraction is preferably 80 mass% or less.

The water-based coating material may contain an organic reductant. The inclusion of an organic reductant can favorably promote a chromium reduction reaction. The type of organic reductant is not particularly limited. At least one from among diols and sugars is preferably selected. In particular, among diols, more preferably one or more is selected from ethylene glycol and 1,4-butanediol, and among sugars, more preferably one or more is selected from glycerin, polyethylene glycol, saccharose, lactose, sucrose, glucose, and fructose.

When the water-based coating material contains an organic reductant, from the viewpoint of obtaining the full effect, the solid mass fraction of the organic reductant relative to the total mass in terms of solid content of resin, inorganic component, organic reductant, and B compound is preferably 10 mass% or more. Further, when the organic reductant content is too high, coating properties after annealing degrade, and therefore the mass fraction is preferably 30 mass% or less.

The water-based coating material may contain a B compound. The inclusion of a B compound effectively mitigates coating cracking that may occur during strain annealing and can favorably improve powdering resistance. Examples of B compounds include boric acid, orthoboric acid, metaboric acid, tetraboric acid, sodium metaborate, sodium tetraborate, and the like, which can be used alone or in combination. The B compound is not limited to these and, for example, may be a compound that dissolves in water to produce borate ions, and the borate ions can be linearly or cyclically polymerized.

When the water-based coating material contain a B compound, from the viewpoint of obtaining the full effect, the solid mass fraction of the B compound relative to the total mass in terms of solid content of resin, inorganic component, organic reductant, and B compound is preferably 5 mass% or more. When the B compound content is too high, coating properties after annealing degrade, and therefore the mass fraction is preferably 30 mass% or less.

The water-based coating material has a viscosity of 1.0 mPa·s or more. When the viscosity of the water-based coating material is less than 1.0 mPa·s, resin particles tend to settle in the coating material and form non-uniform aggregates, and weldability under more severe evaluation conditions cannot be fully obtained. Although the cause of degradation of weldability due to non-uniform agglomeration is not clear, it may be that the presence of non-uniform agglomerates of resin particles makes it difficult to remove low-boiling-point components from the water-based coating material (coating), regardless of whether heating from the steel sheet side or the coating surface side. By keeping the viscosity of the water-based coating material to an appropriate range, resin particles can be dispersed uniformly in the coating material, thereby suppressing the formation of floc. The viscosity of the water-based coating material is preferably 40 mPa·s or less. The viscosity is more preferably 10 mPa·s or less. When the viscosity is 10 mPa·s or less, thread-like coating defects, called roping, can be favorably suppressed when forming the coating on the steel sheet.

To achieve the desired viscosity of the water-based coating material, solid concentration may be adjusted, or a viscosity modifier may be added. The type of viscosity modifier is not particularly limited, and acrylic polymers, urethane-modified polyethers, and other typically used viscosity modifiers may be used.

Hereinafter, the viscosity of the water-based coating material is a value measured after each component is mixed in a defined proportion and adjusted to the desired solid concentration. Further, viscosity is measured in accordance with JIS K 6901:2021. For example, viscosity can be measured using a BM-type viscometer (produced by Tokyo Keiki Co., Ltd.) at a test temperature of 25 °C.

Any method of applying the water-based coating material may be used as long as it is possible to apply the water-based coating material on the steel sheet. Various methods such as a roll coater method, a bar coater method, an air knife method, and a spray coater method are applicable.

There are no particular restrictions on the method of heating the coating. A typical baking method using a gas furnace or an electric furnace may be used. An induction heating method that uses eddy currents generated when an electric current is passed through the steel sheet to heat the steel sheet is preferably used. There are no particular restrictions on the frequency and heating rate of induction heating. Appropriate selection may be made according to heating time and efficiency, which are constrained by apparatus, properties of the electrical steel sheet (thickness, magnetic permeability, etc.), and the like. The heating temperature, that is, the peak metal temperature, is the temperature necessary to form the insulating coating, but since the water-based coating material is used, the heating temperature is preferably 100 °C or more. The heating temperature is more preferably 150 °C or more. By setting the temperature to 100 °C or more, water residue is favorably suppressed. Further, the peak metal temperature is preferably 350 °C or less. By setting the temperature to 350 °C or less, pyrolysis of the resin can be favorably suppressed.

The heating of the coating is preferably heating from the steel sheet side (layer below the coating). By heating from a layer below the coating, punchability and weldability are favorably obtainable. The reasons for this are not clear, but are considered to be as follows.
(1) When heated from a layer below the coating, convection occurs within the unsolidified coating, and resin that is not completely dissolved but in the form of particles, such as emulsion resin and dispersion resin, is concentrated in the vicinity of a surface layer, increasing the amount in the outermost surface layer resin, thereby improving punchability.
(2) When the coating is heated from the surface, the surface dries first, and low-boiling-point components tend to remain inside the coating, becoming gas and causing blowholes during welding. However, when heated from the steel sheet side (layer below the coating), the low-boiling-point components are effectively removed from the coating, resulting in stable weldability.

The coating weight of the insulating coating is preferably 0.05 g/m² or more by dry weight. When the coating weight of the insulating coating is 0.05 g/m² or more, uniform application is favorable and coating performance is stable. Further, the coating weight of the insulating coating is preferably 7.0 g/m² or less by dry weight. By setting to 7.0 g/m² or less, coating adhesion is favorably obtainable.

### EXAMPLES

The resins, inorganic components, organic reductants, and B compounds listed in Tables 1 and 2 were added to deionized water to reach the mass% (in terms of solids) listed in Tables 1 and 2, and mixed to prepare the water-based coating material. Although ethylene glycol used as an organic reductant is liquid at room temperature, content was calculated as a solid. The solid concentration of the water-based coating material was 3 mass%. A thickener A-10H (produced by Toagosei Co., Ltd.) was added to the water-based coating material as a viscosity modifier so that the viscosity of the water-based coating material in each case was as listed in Tables 1 and 2.

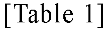

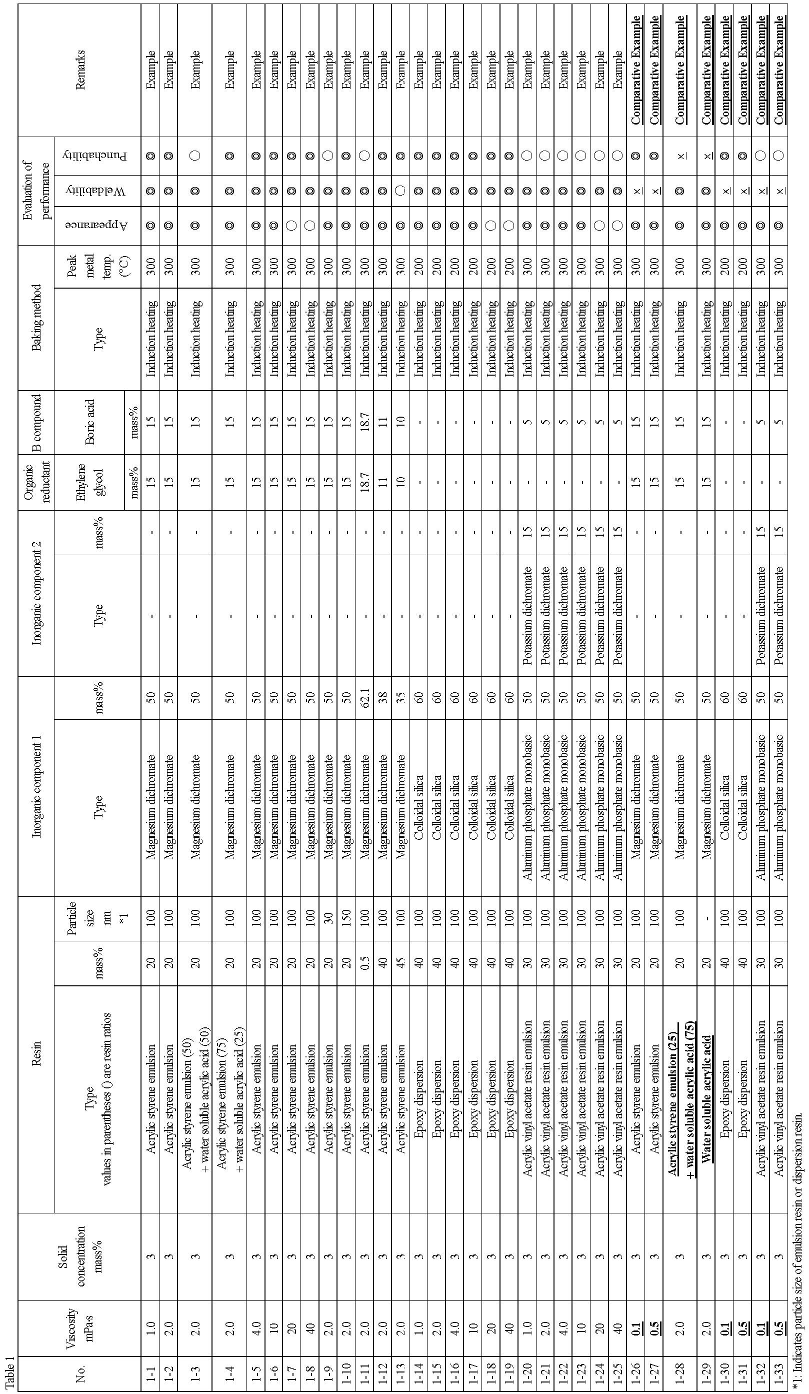

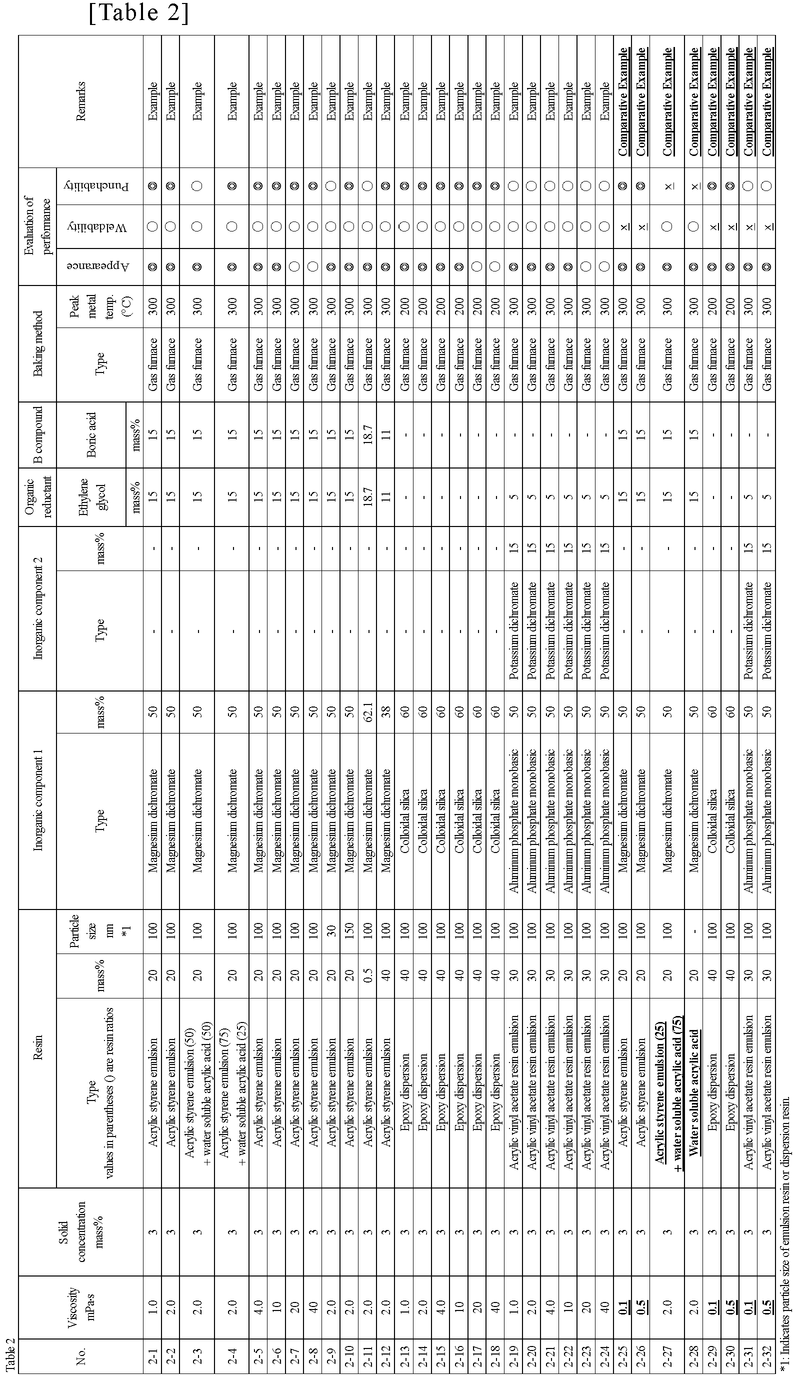

In each case, the water-based coating material was applied with a roll coater to the surface of a test piece 150 mm wide and 300 mm long cut from an electrical steel sheet 0.5 mm thick, and baked by an induction heating method (Table 1) or a hot air oven heating method using a gas furnace (Table 2) to the peak metal temperature listed in Table 1 and Table 2, and then allowed to naturally cool at room temperature to form an insulating coating. Further, the coating weight of the insulating coating in each case was uniform at 0.5 g/m² by dry weight.

The appearance, weldability, and punchability of the insulating coatings were evaluated as follows, and the results are listed in Tables 1 and 2.

### [Coating appearance evaluation]

The appearance of the steel sheet surface after coating was visually observed to check for roping.

### (Criteria)

⊚: No roping occurred
O: Slight roping, but no effect on coating performance
×: Coating performance degraded due to severe roping

### [Weldability evaluation]

Steel sheets were stacked to a thickness of 3 cm, TIG welded under the following conditions, and evaluated at the maximum welding speed at which blow holes did not occur. According to PTL 1, evaluation was conducted under a current value condition of 120 A, but in order to evaluate under more severe welding conditions, the welding test was carried out with a current value of 150 A.
- Electrode: Th-W 2.6 mm diameter
- Electrode force: 10 N/mm²
- Current: 150 A
- Shielding gas: Ar (6 l/min)

### (Criteria)

⊚: 120 cm/min or more
O: 80 cm/min or more to less than 120 cm/min
×: Less than 80 cm/min

### [Punchability evaluation]

Continuous punching tests were carried out under the following conditions, adjusting the press die to achieve an initial burr height of 10 µm, and evaluation was based on the number of punches until the burr height reached 50 µm.
- Clearance using 15 mm diameter steel die: 5 %
- Punching oil: used

### (Criteria)

⊚: 1,000,000 or more
O: 500,000 or more to less than 1,000,000
×: Less than 500,000

Table 1 indicates that the Examples, where the viscosity of the water-based coating material was 1 mPa·s or more, were superior to the Comparative Examples in appearance, weldability, and punchability. Comparison of Tables 1 and 2 indicates that heating from a layer below the coating by induction heating provides better weldability than heating by a gas furnace, but even in the case of a gas furnace, performance was improved by controlling the viscosity of the water-based coating material. From this, it is clear that the effects of the present disclosure are obtainable regardless of the heating method.

### INDUSTRIAL APPLICABILITY

The present disclosure provides a method of producing an electrical steel sheet with an insulating coating that excels in both punchability and weldability under more severe evaluation conditions.

## Claims

1. A method of producing an electrical steel sheet with an insulating coating, the method comprising:
a process of preparing a water-based coating material; and
a process of applying the water-based coating material to the surface of an electrical steel sheet and heating and drying to form an insulating coating, wherein
the water-based coating material contains resin, an inorganic component, an optional organic reductant, an optional boron compound, and water,
50 mass% or more of the resin consists of one or both of emulsion resin and dispersion resin, and
the water-based coating material has a viscosity of 1.0 mPa·s or more.

2. The method of producing an electrical steel sheet with an insulating coating according to claim 1, wherein the water-based coating material has a viscosity of 40 mPa·s or less.

3. The method of producing an electrical steel sheet with an insulating coating according to claim 1, wherein the water-based coating material has a viscosity of 10 mPa·s or less.

4. The method of producing an electrical steel sheet with an insulating coating according to any one of claims 1 to 3, wherein one or both of the emulsion resin and the dispersion resin in the water-based coating material have a particle size of 30 nm or more.

5. The method of producing an electrical steel sheet with an insulating coating according to any one of claims 1 to 4, wherein a solid mass fraction of the resin relative to the total mass in terms of solid content of the resin, the inorganic component, the organic reductant, and the boron compound in the water-based coating material is 0.5 mass% or more and 50 mass% or less.
